# EUROPEAN PATENT APPLICATION

(11) **EP 4 799 747 A1**
(43) Date of publication of application: **02.09.2026**
(21) Application number: 26158744.8
(22) Date of filing: 16.02.2026
(51) Int. Cl.: B22F 9/14, B22F 1/065, B22F 9/08, G01N 15/0227, B05B 12/00, B05B 12/08

(54) **REACTIVE METAL POWDER IMAGING SYSTEM AND METHOD**

(30) Priority: 28.02.2025 US 202563764789 P
(71) Applicant: AP&C Advanced Powders & Coatings Inc., Boisbriand J7H 1R8 (CA)
(72) Inventor: Kroeger, Jens, Saint-Eustache, QC CA J7R 0L5 (CA); Caron, Christian, Saint-Eustache, QC CA J7R 0L5 (CA); Carrier, François, Saint-Eustache, QC CA J7R 0L5 (CA); Poirié, Thomas, Saint-Eustache, QC CA J7R 0L5 (CA)
(74) Representative: Hafner & Kohl PartmbB

(57) **Abstract**

An atomizing system (36) may have an imaging system (48) operatively coupled with an in-flight heat treatment device (10). The atomizing system (36) includes an imaging device (50) configured to capture an image (58) of at least a portion of an atomization zone (42) of the in-flight heat treatment device (10). A computing system (60) is operably coupled with the imaging device (50). The computing system (60) may be configured to receive the image (58) from the imaging device (50), define a region of interest (ROI (78)) from the image (58), segment the ROI (78), determine a characteristic of each pixel (80) within the ROI (78), and determine a particle size distribution of a reactive metal powder (44) based on the characteristic of each pixel (80) within the ROI (78).

## Description

### CROSS-REFERENCE TO RELATED APPLICATION

The present application claims priority to United States Provisional Patent Application Serial No. 63/764,789, filed on February 28, 2025, the contents of which are hereby incorporated by reference in their entirety.

### FIELD

The present disclosure relates to the field of production of spheroidal powders, such as reactive metal powders. More particularly, the present disclosure relates to methods for preparing reactive metal powders having improved flowability.

### BACKGROUND

Fine powders are useful for applications such as 3D printing, powder injection molding, hot isostatic pressing, and coatings. Such fine powders are used in aerospace, biomedical, and industrial fields of application.

A powder having poor flowability may tend to form agglomerates having lower density and higher surface area. These agglomerates can be detrimental when used in applications that require fine reactive metal powders. Furthermore, reactive powder with poor flowability can cause pipes to clog and/or stick on the walls of an atomization chamber of an atomizing apparatus or on the walls of conveying tubes. Moreover, powders in the form of agglomerates are more difficult to sieve when separating powder into different size distributions. Manipulation of powder in the form of agglomerates also increases the safety risks, as a higher surface area translates into higher reactivity.

By contrast, reactive metal powders having improved flowability are desirable for various reasons. For example, they can be used more easily in powder metallurgy processes, such as additive manufacturing and coatings. However, variations in manufacturing processes may lead to varied particle size distribution and/or yields of such powders.

### BRIEF DESCRIPTION

Aspects and advantages will be set forth in part in the following description, or may be obvious from the description, or may be learned through practice of the invention.

In some aspects, the present subject matter is directed to an atomizing system that has an imaging system operatively coupled with an in-flight heat treatment device. The atomizing system includes an imaging device configured to capture an image of at least a portion of an atomization zone of the in-flight heat treatment device. A computing system is operably coupled with the imaging device. The computing system includes a processor and associated memory. The memory storing instructions that, when implemented by the processor, configure the computing system to receive the image from the imaging device; define a region of interest (ROI) from the image; segment the ROI, determine a characteristic of each pixel within the ROI, and determine a particle size distribution of a reactive metal powder based on the characteristic of each pixel within the ROI.

In some aspects, the present subject matter is directed to a method for operating an atomizing system having an in-flight heat treatment device operatively coupled with an imaging system to detect reactive metals. The method includes receiving, from an imaging device, an image of at least a portion of an atomization zone of the in-flight heat treatment device. The method also includes segmenting, with a computing system, a region of interest (ROI) from the image. The method further includes segmenting, with the computing system, each pixel within the ROI. In addition, the method includes determining, with the computing system, a characteristic of each pixel within the ROI. Lastly, the method includes determining, with the computing system, an atomization yield based on the characteristic of each pixel within the ROI.

An atomizing system comprising: an in-flight heat treatment device configured to form a reactive metal powder within a reaction zone that includes a jet of an atomization gas, an additive gas, and metal particles that transform a metal source into the reactive metal powder in an atomization zone downstream of the reaction zone; an imaging device configured to capture an image of at least a portion of the atomization zone of the in-flight heat treatment device; and a computing system operably coupled with the imaging device, the computing system including a processor and associated memory, the memory storing instructions that, when implemented by the processor, configure the computing system to: receive the image from the imaging device; determine a characteristic of each pixel within the image; and determine a particle size distribution of the reactive metal powder based on the characteristic of each pixel within the image.

These and other features, aspects, and advantages will become better understood with reference to the following description and appended claims. The accompanying drawings, which are incorporated in and constitute a part of this specification, illustrate embodiments of the invention and, together with the description, serve to explain certain principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended Figs., in which:
FIG. 1 is a schematic view of an in-flight heat treatment process using a plasma torch and axial powder injection in accordance with various aspects of the present disclosure;
FIG. 2 is a schematic view of an example atomizing system and an imaging system optically coupled with the atomizing system;
FIG. 3 is a block diagram of the imaging system in accordance with various aspects of the present disclosure;
FIG. 4 is an example image captured by the imaging system in accordance with various aspects of the present disclosure;
FIG. 5 is an example region of interest (ROI) illustrated by box V within the image of FIG. 4 in accordance with various aspects of the present disclosure;
FIG. 6 is an example enhanced pixelated view of box VI of the ROI of FIG. 5 in accordance with various aspects of the present disclosure; and
FIG. 7 is a method of operating the atomizing system and an imaging system to detect reactive metals in accordance with various aspects of the present disclosure.

Repeat use of reference characters in the present specification and drawings is intended to represent the same or analogous features or elements of the present technology.

### DETAILED DESCRIPTION

Reference now will be made in detail to embodiments of the invention, one or more examples of which are illustrated in the drawings. Each example is provided by way of an explanation of the invention, not a limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

In this document, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof are intended to cover a non-exclusive inclusion, such that a process, method, article, or apparatus that comprises a list of elements does not include only those elements but may include other elements not expressly listed or inherent to such process, method, article, or apparatus. An element preceded by "comprises... a" does not, without more constraints, preclude the existence of additional identical elements in the process, method, article, or apparatus that comprises the element.

As used herein, the terms "first," "second," and "third" may be used interchangeably to distinguish one component from another and are not intended to signify a location or importance of the individual components. The terms "coupled," "fixed," "attached to," and the like refer to both direct coupling, fixing, or attaching, as well as indirect coupling, fixing, or attaching through one or more intermediate components or features, unless otherwise specified herein. The terms "upstream" and "downstream" refer to the relative direction with respect to a fluid within a fluid circuit. For example, "upstream" refers to the direction from which a fluid flows, and "downstream" refers to the direction to which the fluid moves. The term "selectively" refers to a component's ability to operate in various states (*e.g.,* an ON state and an OFF state) based on manual and/or automatic control of the component.

Furthermore, any arrangement of components to achieve the same functionality is effectively "associated" such that the functionality is achieved. Hence, any two components herein combined to achieve a particular functionality may be seen as "associated with" each other such that the desired functionality is achieved, irrespective of architectures or intermedial components. Likewise, any two components so associated may also be viewed as being "operably connected" or "operably coupled" to each other to achieve the desired functionality, and any two components capable of being so associated may also be viewed as being "operably couplable" to each other to achieve the desired functionality. Some examples of operably couplable include, but are not limited to, physically mateable, physically interacting components, wirelessly interactable, wirelessly interacting components, logically interacting, and/or logically interactable components.

The word "a" or "an" when used in conjunction with the term "comprising" in the claims and/or the specification may mean "one", but it is also consistent with the meaning of "one or more", "at least one", and "one or more than one" unless the context clearly dictates otherwise. Similarly, the word "another" may mean at least a second or more unless the content clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially," is not to be limited to the precise value specified. In at least some instances, the approximating language may correspond to the precision of an instrument for measuring the value, or the precision of the methods or apparatus for constructing or manufacturing the components and/or systems. For example, the approximating language may refer to being within a ten percent margin.

Moreover, the technology of the present application will be described in relation to exemplary embodiments. The word "exemplary" is used herein to mean "serving as an example, instance, or illustration." Any embodiment described herein as "exemplary" is not necessarily to be construed as preferred or advantageous over other embodiments. Additionally, unless specifically identified otherwise, all embodiments described herein will be considered exemplary.

As used herein, the term "and/or," when used in a list of two or more items, means that any one of the listed items may be employed by itself, or any combination of two or more of the listed items may be employed. For example, if a composition or assembly is described as containing components A, B, and/or C, the composition or assembly may contain A alone; B alone; C alone; A and B in combination; A and C in combination; B and C in combination; or A, B, and C in combination.

The expression "atomization zone" as used herein, when referring to a method, apparatus, or system for preparing a metal powder, refers to a zone in which the material is atomized into droplets of the material. The person skilled in the art would understand that the dimensions of the atomization zone will vary according to various parameters such as the atomizing means, velocity of the atomizing means, material in the atomizing means, power of the atomizing means, temperature of the material before entering in the atomization zone, nature of the material, dimensions of the material, electrical resistivity of the material, etc.

The expression "heat zone of an atomizer" as used herein refers to a zone where the powder is sufficiently hot to react with the oxygen atoms of the oxygen-containing gas in order to generate an oxide within the particles, as discussed in embodiments of the present disclosure.

The expression "metal powder has an X-Y µm particle size distribution" means it has less than 5% wt. of particles above Y µm size with the latter value measured according to ASTM B214-16 standard. It also means it has less than 6% wt. of particles below X µm size (d6 ≥ X µm) with the latter value measured according to ASTM B822 standard.

The expression "metal powder having a 15-45 µm particle size" means it has less than 5% wt. of particles above 45 µm (measured according to ASTM B214-16 standard) and less than 6% wt. of particles below 15 µm (measured according to ASTM B822 standard).

The expression "reactive metal powder" as used herein refers to a metal powder that cannot be efficiently prepared via the classical gas atomization process in which a close-coupled nozzle is used. For example, such a reactive metal powder can be a powder comprising at least one member chosen from titanium, titanium alloys, zirconium, zirconium alloys, magnesium, magnesium alloys, aluminum, and aluminum alloys.

The expression "raw reactive metal powder" as used herein refers to a reactive metal powder obtained directly from an atomization process without any post-processing steps such as sieving or classification techniques.

The expression "in-flight heat treatment process" as used herein refers to a process effective for modifying the chemical composition of the surface of metal particles of the metal powder and for improving the flowability of the metal powder. For example, such an in-flight heat treatment process can be an atomization process, a spheroidization process, an in-flight furnace heating process, or an in-flight plasma heating process.

The expression "yield" as used herein refers to the efficiency of a reactive metal powder production process, expressed as the percentage of usable metal powder obtained relative to the total mass of the input metal source. Specifically, "yield" defines a ratio of the mass of specification-compliant reactive metal powder that meets defined criteria (e.g., particle size distribution, flowability, sphericity, and purity per standards like AMS 4998) to the initial mass of the metal feedstock used in processes, such as plasma atomization or in-flight heat treatment, multiplied by 100%.

It was observed that reactive metal powder having fine particle sizes, such as within a size distribution below 106 µm, possesses more surface area and stronger surface interactions. These result in poorer flowability behavior than coarser powders. The flowability of a powder depends on one or more of various factors, such as particle shape, particle size distribution, surface smoothness, moisture level, satellite content, and the presence of static electricity. The flowability of a powder is thus a complex macroscopic characteristic resulting from the balance between adhesion and gravity forces on powder particles.

In various examples, particle size distribution can be of about 10 to about 53 µm having a flowability less than 40 s, measured according to ASTM B213; of about 10 to about 45 µm having a flowability less than 40 s, measured according to ASTM B213; of about 15 to about 45 µm having a flowability less than 40 s, measured according to ASTM B213; of about 15 to about 53 µm having a flowability less than 40 s, measured according to ASTM B213; of about 25 to about 45 µm having a flowability less than 40 s, measured according to ASTM B213; of about 25 to about 53 µm having a flowability less than 40 s, measured according to ASTM B213; of about 45 to about 75 µm having a flowability less than 28 s, measured according to ASTM B213; of about 45 to about 106 µm having a flowability less than 28 s, measured according to ASTM B213; of about 45 to about 150 µm having a flowability less than 28 s, measured according to ASTM B213; and/or of about 45 to about 180 µm having a flowability less than 28 s, measured according to ASTM B213.

In general, an in-flight heat treatment device may use an atomizing source, such as a plasma torch, to heat a metal. In various examples, an atomization gas from the atomizing source may be mixed with an additive gas to perform a chemical reaction in a reaction zone with the metal to form a reactive metal powder. The reactive metal powder may then be used for applications such as 3D printing, powder injection molding, hot isostatic pressing, and coatings.

An imaging system is operatively coupled with the in-flight heat treatment device. The imaging system includes an imaging device configured to capture an image of at least a portion of an atomization zone of the in-flight heat treatment device. For instance, the imaging device may generate an image having a field of view through a window of the in-flight heat treatment device. In such instances, the imaging device may be positioned externally of a housing of the in-flight heat treatment device.

A computing system is operably coupled with the imaging device. The computing system includes a processor and associated memory. The memory stores instructions that, when implemented by the processor, configure the computing system to receive the image from the imaging device, define a region of interest (ROI) from the image, segment the ROI, determine a characteristic of each pixel within the ROI, and determine a particle size distribution of the metal powder, a yield, and/or any other information based on the characteristic of each pixel within the ROI.

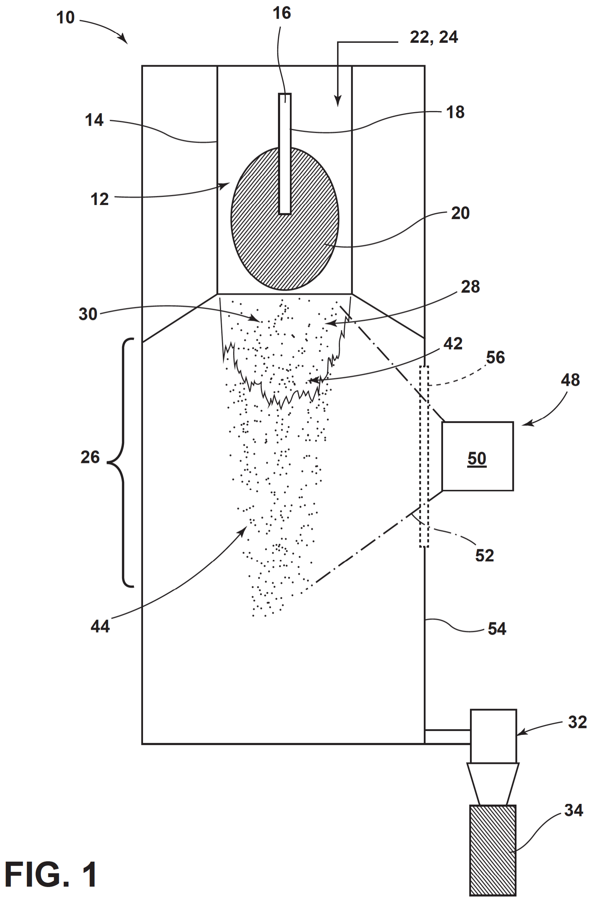

Referring to FIG. 1, illustrated is a schematic view of an in-flight heat treatment device 10 that uses an atomizing source 12, such as a plasma torch 14, to heat a metal source 16 that is to be treated by injecting the metal source 16 through an injection probe 18 in the plasma 20 of the plasma torch 14. In various examples, an atomization gas 22 from the atomizing source 12 is mixed with an additive gas 24 to perform a chemical reaction in a reaction zone 26. The reaction zone 26 may include a jet 28 or stream of the atomization gas 22, the additive gas 24, and metal particles 30 that transform the metal source 16 into a reactive metal powder 44 in an atomization zone 42. The reactive metal powder 44 is then transported to a powder collector 32 and recovered in a collecting bucket 34.

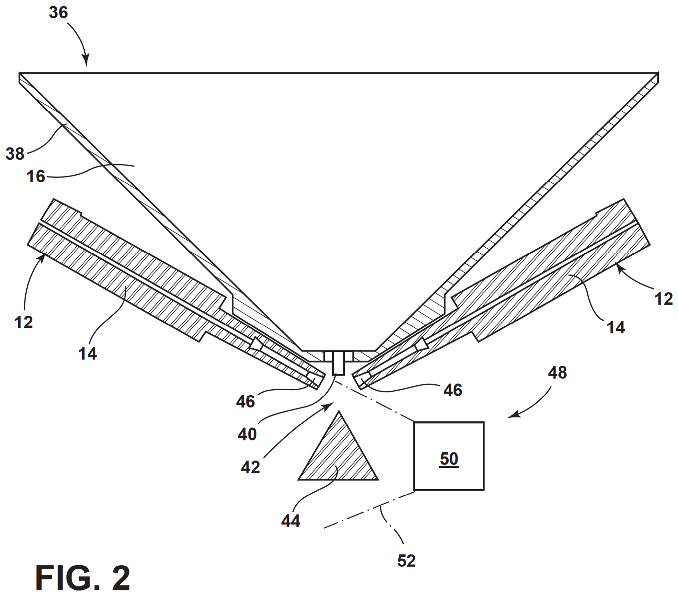

Referring now to FIG. 2, an atomizing system 36 that may be incorporated within the in-flight heat treatment device 10 (FIG. 1) is illustrated in accordance with various aspects of the present disclosure. In the illustrated example, the atomizing system 36 includes a receptacle 38 that receives a feed of the metal source 16 from an upstream system. For example, the feed of a metal source 16 is provided as a melted stream, but it may be provided as a metal rod or wire as well. The metal source 16 may be heated according to various techniques, such as using one or more electrodes, an inductive heating device, and/or any other heating device.

The heated metal source 16 is fed through an outlet 40 defined by the receptacle 38 into the atomization zone 42, which is contacted (e.g., immediately contacted) with the atomization gas 22 (FIG. 1) from the atomizing source 12. Contact of the heated metal source 16 by the atomization gas 22 causes the raw reactive metal powder 44 to be formed, which is then exited from the atomization zone 42. For example, the atomization gas 22 may be inert. In various examples, the inert gas can be chosen from Ar and/or He.

It will be understood that while the illustrated atomizing system 36 includes atomizing plasma torches 14, methods and apparatus described herein for forming reactive metal powder 44, having improved flowability may be applied to other types of a spherical powder production system, such as a skull melting gas atomization process, an electrode induction melting gas atomization process (EIGA process), a plasma rotating electrode process, a plasma (RF, DC, MW) spheroidization process, etc.

According to the illustrated example, the atomizing source 12 includes at least one plasma torch 14. At least one discrete nozzle 46 of the at least one plasma torch 14 is directed towards the atomization zone 42. For example, the cross-section of the nozzle 46 may be tapered towards the atomization zone 42 feed to focus the plasma 20 (FIG. 1) that contacts the metal source 16 as the metal source enters the atomization zone 42. In some cases, the nozzle 46 may be positioned so that an apex of the jet 28 (FIG. 1) contacts the metal source feed from the receptacle 38. The contacting of the metal source feed by the plasma 20 from the at least one plasma torch 14 causes the metal source 16 to be atomized.

Where a plurality of plasma torches 14 are provided, the nozzles of the torches are discrete nozzles 46 and may be oriented towards the metal source 16 from the receptacle 38. For example, the discrete nozzles 46 may be positioned so the jet 28 (FIG. 1) contacts the metal source 16 from the receptacle 38. In various examples, three plasma torches 14 may be utilized that are each oriented towards the metal source 16 from the receptacle 38.

According to various exemplary embodiments for preparing spheroidal powders, the heated metal source 16 contacts at least one additive gas 24 (FIG. 1) while carrying out the atomization process. The additive gas 24 can be any gas comprising an electronegative atom or molecule. For instance, the additive gas 24 may include fluorine, chlorine, iodine, bromide, hydrogen-based, nitrogen-based, and carbon-based compounds. The additive gas 24 may additionally or alternatively be an oxygen-containing gas. The expression "oxygen-containing gas" as used herein refers to a gas that contains at least one atom of oxygen. For example, such a gas may be O₂, CO₂, CO, NO₂, air, water vapor, ozone, etc.

According to various exemplary embodiments, the additive gas 24 contacts the heated metal source 16 within the atomization zone 42. This atomization zone 42 is a high-heat zone of the atomizer. Accordingly, the heated metal source 16 may be contacted by the atomization gas 22 and the additive gas 24 at substantially the same time within the atomization zone 42.

The atomization of the heated metal source 16 with the additive gas 24 can take place as long as the metal particles allow the electronegative atoms and/or molecules to diffuse several tens of nanometers into the surface layer of the heated metal source 16.

It will be understood that, according to various exemplary embodiments described herein, the additive gas 24 contacts the heated metal source 16 during the atomization process in addition to the contacting of the heated metal source 16 with the atomization gas 22. It will be further understood that, according to existing atomization processes, some additive gas 24 may be inherently introduced into the atomization gas 22, such as through contamination, latent impurities, or leaks. For example, the introduced additive gas 24 may include air or oxygen. However, according to various exemplary embodiments described herein for producing spheroidal powders, the additive gas 24 for contacting the heated metal source 16 is deliberately provided in addition to any additive gas 24 that could be inherently introduced during the atomization process.

According to various alternative exemplary embodiments, the atomization gas 22 and the additive gas 24 are mixed before contact with the heated metal source 16. The atomization gas 22 and the additive gas 24 may be mixed within a gas storage tank or a pipe upstream of the contact with the heated metal source 16. For example, the additive gas 24 may be injected into a tank of the atomization gas 22. The injected additive gas 24 is in addition to any additive gas 24 inherently present in the atomization gas 22.

The amount of additive gas 24 contacting the heated metal source 16 may be controlled based on the defined end properties of the reactive metal powders 44 to be formed from the atomization process. For example, the additive gas 24 contained within the formed reactive metal powder 44 may be viewed as a contaminant of the reactive metal powder 44. Accordingly, the amount of additive gas 24 contacting the heated metal source 16 is controlled so that the amount of atoms and/or molecules of the additive gas 24 contained within the reactive metal powder 44 is maintained within certain limits. For example, the chemical composition limit within the reactive metal powder 44 may be prescribed by appropriate standards, such as the composition in Table 1 of AMS 4998, ASTM F3001, ASTM F2924, ASTM B348, ASTM B350, and in Table 3 of ASTM B550. Accordingly, the amount of additive gas 24 contacting the heated metal source 16 is controlled based on the composition of the additive gas 24 and the limit or limits prescribed by a standard for the one or more atoms and/or molecules composing the additive gas 24. For example, where the additive gas 24 contains oxygen and the reactive metal powder 44 to be formed is titanium alloy powder, the amount of additive gas 24 contacting the heated metal source 16 is controlled so that the amount of oxygen within the formed reactive metal powder 44 is below 1800 ppm according to the AMS 4998 standard and is below 1300 ppm according to ASTM F3001.

Additionally or alternatively, where the additive gas 24 contains carbon and the reactive metal powder 44 to be formed is titanium alloy powder, the amount of additive gas 24 contacting the heated metal source 16 is controlled so that the amount of carbon within the formed reactive metal powder 44 is below 1000 ppm according to the AMS 4998 standard and is below 800 ppm according to ASTM F3001.

Additionally or alternatively, where the additive gas 24 contains hydrogen and the reactive metal powder 44 to be formed is titanium alloy powder, the amount of additive gas 24 contacting the heated metal source 16 is controlled so that the amount of hydrogen within the formed reactive metal powder 44 is below 120 ppm according to the AMS 4998 standard and ASTM F3001.

Additionally or alternatively, where the additive gas 24 contains nitrogen and the reactive metal powder 44 to be formed is titanium alloy powder, the amount of additive gas 24 contacting the heated metal source 16 is controlled so that the amount of nitrogen within the formed reactive metal powder 44 is below about 400 ppm according to the AMS 4998 standard and is below 500 ppm according to ASTM F3001.

Additionally or alternatively, where the additive gas 24 contains chlorine and the reactive metal powder 44 to be formed is titanium metal powder, the amount of additive gas 24 contacting the heated metal source 16 is controlled so that the amount of chlorine within the formed reactive metal powder 44 is below about 1000 ppm according to the ASTM F3001 standard.

In various examples, the amount of additive gas 24 contacting the heated metal source 16 may be controlled by controlling the quantity of additive gas 24 injected into the atomization gas 22 when forming the atomization mixture. For example, the amount of additive gas 24 injected may be controlled to achieve one or more desired ranges of ratios of atomization gas 22 to additive gas 24 within the formed atomization mixture.

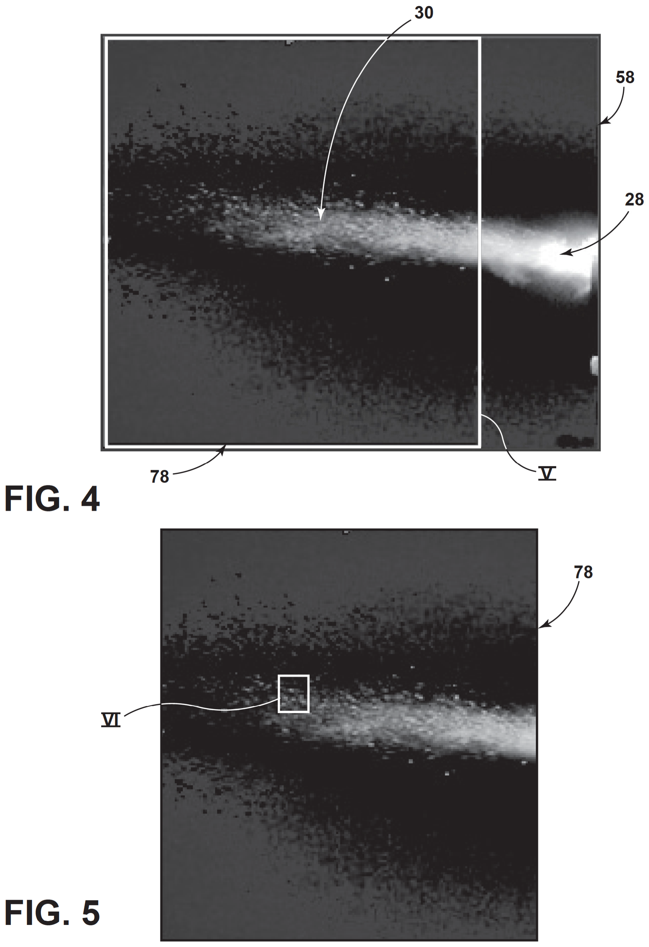

For reactive metal powders 44 formed without the addition of an additive gas 24, it was observed that reactive metal powders 44 having various particle size distributions and that had undergone sieving and blending steps did not always flow sufficiently to allow measurement of their flowability in a Hall flowmeter (see FIG. 5 of ASTM B213). For example, reactive metal powder 44 falling within particle size distributions between 10-53 µm did not flow in a Hall flowmeter according to ASTM B213. Without being bound by the theory, one important factor causing the poor flowability of reactive metal powder 44 is its sensitivity to static electricity. The sieving, blending, and manipulation steps may cause particles of the reactive metal powder 44 to collide with one another, thereby increasing the level of static electricity. This static electricity further creates cohesive forces between particles, which causes the reactive metal powder 44 to flow poorly. The raw reactive metal powder 44 is formed from atomizing the heated metal source 16 by contacting the heated metal source 16 with the atomization gas 22, and the additive gas 24 is further collected. The collected raw reactive metal powder 44 contains a mixture of metal particles of various sizes. The raw reactive metal powder 44 is further sieved to separate the raw reactive metal powder 44 into different size distributions, such as 10-45 µm, 15-45 µm, 10-53 µm, 15-53 µm, and/or 25-45 µm.

After sieving, each particle size distribution of metal powder is separately stirred in distilled water or demineralized water. The stirring may help to remove electrostatic charges accumulated on the surface of the particles of the metal powder.

After sieving, each particle size distribution of metal powder is separately left to dry. It was observed that reactive metal powders 44 formed according to various exemplary atomization methods described herein, in which the heated metal source 16 is contacted with the additive gas 24, exhibited substantially higher flowability than reactive metal powders 44 formed from an atomization method without the contact of the additive gas 24. This difference in flowability between metal powders formed according to the different methods can mostly be sized in metal powders having the size distributions of 10-45 µm, 15-45 µm, 10-53 µm, 15-53 µm, and/or 25-45 µm or similar particle size distributions. However, it will be understood that metal powders in other size distributions may also exhibit a slight increase in flowability when formed according to methods that include contact of the heated metal source 16 with the additive gas 24.

In some instances, from contact with the heated metal source 16 with the additive gas 24 during atomization, atoms and/or molecules of the additive gas 24 react with particles of the reactive metal powder 44 as these particles are being formed. Accordingly, a first layer formed of a compound of the heated metal source 16 with the additive gas 24 that is depleting through the thickness is formed on the outer surface of the particles of the reactive metal powder 44. This layer is thicker and deeper on the surface and is located below the native oxide layer. For example, the compound of the heated metal with the additive gas 24 in the depleted layer is metal oxide, nitride, carbide, or halide. Since the atoms of the additive gas 24 are depleting through the thickness of the surface layer, it forms a non-stoichiometric compound with the metal. Such a compound causes this first layer to have a substantially positive charge. This first layer may be formed at high temperatures since the electronegative atoms and/or molecules have enough energy to diffuse into the surface layer than in a native oxide layer. A second layer, being a native oxide layer, is further formed on the surface of the particles of the reactive metal powder 44. The hydroxyl group formed at the surface causes the second layer to have a substantially negative charge.

The first layer, having a substantially positive charge, and the second layer, having a substantially negative charge, form together an electric double layer. The combined charge of the double layer has a substantially neutral charge (i.e., net charge tending to zero). This neutral charge on the surface of the particles of the reactive metal powder 44 may contribute to the improved flowability of the reactive metal powder 44 formed according to the exemplary methods and apparatuses described herein. For example, whereas a net charge on a particle, such as one formed according to traditional atomization methods, will favor the polarization of the particle and increase the interaction with other particles, a weakly charged particle will have little electric interaction with other particles. This decreased interaction may lead to superior flowability.

With further reference to FIGS. 1 and 2, an imaging system 48 may be operatively coupled with the in-flight heat treatment device 10. In various examples, the imaging system 48 may include an imaging device 50 that is provided in operative association with the in-flight heat treatment device 10 such that the imaging device 50 has a field of view 52 directed towards at least a portion of the atomization zone 42. In some embodiments, a housing 54 of the in-flight heat treatment device 10 may include a window 56 that allows for visibility into the atomization zone 42. In the illustrated embodiment, the imaging device 50 is such that the field of view 52 of the imaging device 50 includes at least a portion of the atomization zone 42 through the window 56. In other embodiments, the imaging device 50 may be positioned in any other manner that allows for the field of view 52 to align with at least a portion of the atomization zone 42 without departing from the scope of the present disclosure.

In general, the imaging device 50 may correspond to any suitable device configured to capture one or more images 58 (FIG. 4) of at least a portion of the atomization zone 42. For instance, in several embodiments, the imaging device 50 may correspond to an area-type image sensor, such as a CCD or a CMOS image sensor, and image-capturing optics that capture an image 58 (FIG. 4) of the field of view 52. In various embodiments, the imaging device 50 may correspond to a stereographic camera having two or more lenses with a separate image sensor for each lens to allow the camera to capture stereographic or three-dimensional images. Additionally or alternatively, the imaging device 50 may be configured as any other vision-based or wave-based sensor, such as RADAR sensors, ultrasound sensors, LIDAR devices, and/or any other practicable device.

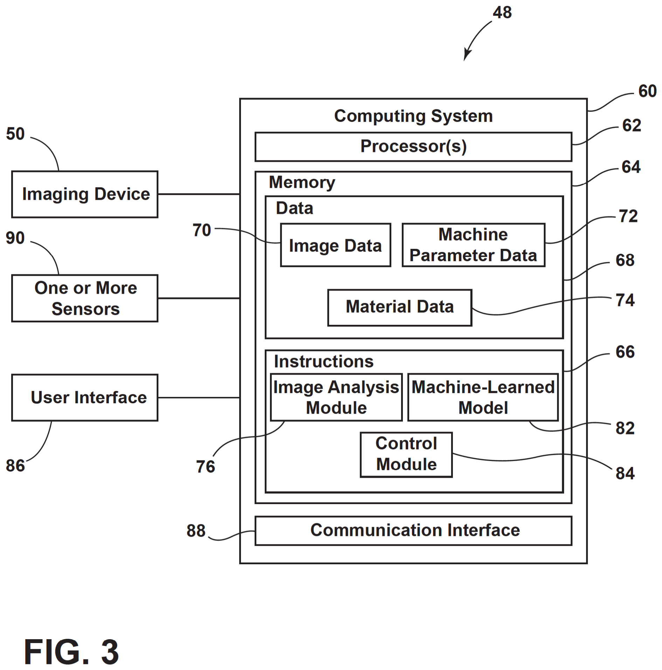

Referring now to FIG. 3, the imaging system 48 may further include a computing system 60 communicatively coupled to the imaging device 50. In several embodiments, the computing system 60 may be configured to receive and process the images 58 (FIG. 4) captured by the imaging device 50 to determine a particle size distribution of the metal powder, a yield, and/or any other information. For instance, the computing system 60 may be configured to execute one or more suitable image processing algorithms for determining the particle size distribution of the metal powder, the yield, and/or any other information.

In general, the computing system 60 may comprise any suitable processor-based device, such as a computing device or any suitable combination of computing devices. Thus, in several embodiments, the computing system 60 may include one or more processor(s) 62 and an associated memory 64 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application-specific integrated circuit, and other programmable circuits. Additionally, the memory 64 of the computing system 60 may generally comprise memory element(s) including, but not limited to, a computer-readable medium (e.g., random access memory (RAM)), a computer-readable non-volatile medium *(e.g.,* a flash memory), a floppy disk, a compact disc-read only memory (CD-ROM), a magneto-optical disk (MOD), a digital versatile disc (DVD) and/or other suitable memory elements. Such memory 64 may generally be configured to store suitable computer-readable instructions 66 that, when implemented by the processor(s) 62, configure the computing system 60 to perform various computer-implemented functions, such as one or more aspects of the image processing algorithm(s) based on data 68 stored within one or more databases. In addition, the computing system 60 may also include various other suitable components, such as a communications circuit or module, one or more input/output channels, a data/control bus, and/or the like.

In several embodiments, the one or more databases store information received and/or generated by the computing system 60. For instance, as shown in FIG. 3, the memory 64 may include an image database 70 storing data associated with the images 58 (FIG. 4) captured by the imaging device 50, including the images 58 (FIG. 4) themselves and/or data deriving from the images 58 (FIG. 4). Additionally, the memory 64 may include a machine parameter database 72 storing data associated with the parameters of the machine, which may affect the powder. For instance, as indicated above, the images 58 (FIG. 4) and related data deriving from the imaging device 50 may be used to determine the particle size distribution of the metal powder, the yield, and/or any other information. Based on the machine parameters, the metal powder may have particles of various sizes, which will affect the outputted distribution and sorting of the particles that make up the metal powder. Additionally or alternatively, the memory 64 may include a material database 74 storing data associated with the makeup of the material, which affects the reactive metal powder 44. For instance, as indicated above, the reactive metal powder 44 can be a powder comprising at least one member chosen from titanium, titanium alloys, zirconium, zirconium alloys, magnesium, magnesium alloys, aluminum, and aluminum alloys. Based on the material, the metal powder may have particles of various sizes, which will affect the outputted distribution and sorting of the particles that make up the metal powder.

Moreover, as shown in FIG. 3, in several embodiments, the instructions 66 stored within the memory 64 of the computing system 60 may be executed by the processor(s) 62 to implement an image analysis module 76. In general, the image analysis module 76 may be configured to process/analyze the images 58 (FIG. 4) received from the imaging device 50 and/or the data deriving therefrom to estimate or determine the particle size distribution of the metal powder, the yield, and/or any other information. In several embodiments, the image analysis module 76 may be configured to execute one or more image processing algorithms to allow for the particle size distribution of the metal powder, the yield, and/or any other information. For example, in some embodiments, the memory 64 storing instructions 66 may configure the computing system 60 to receive the one or more images 58 (FIG. 4) from the imaging device 50.

Additionally, as illustrated in FIG. 5, the computing system 60 (FIG. 3) may be configured to define a region of interest (ROI) 78 from the image 58 (FIG. 4). The ROI 78 (FIG. 5) may be a region of the image 58 (FIG. 4) that includes at least a portion of an atomization zone 42 (FIG. 2) of the in-flight heat treatment device 10 (FIG. 1). In this manner, various features may be extracted from the image 58 (FIG. 4). For example, the ROI 78 may be a region that is downstream of the outlet 40 (FIG. 2) that includes discrete features. The discrete features can include the gases and/or the particles forming the reactive metal powder 44 (FIG 2).

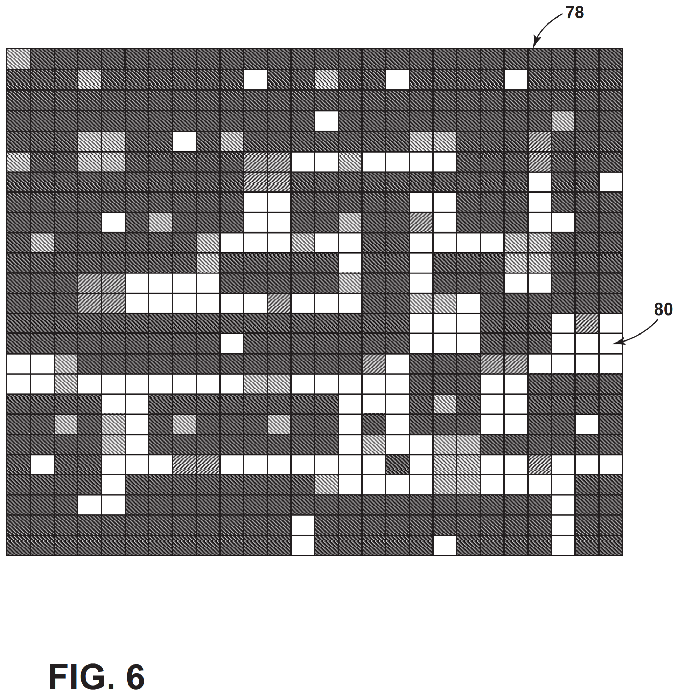

The computing system 60 (FIG. 3) may be configured to segment the ROI 78 by the pixels 80 (FIG. 6) within the ROI 78 (FIG. 5). It will be appreciated, however, that the image 58 (FIG. 4) may be segmented in any other manner without departing from the teachings provided herein. In any manner, each segment may be of a generally equal area and/or otherwise have a defined area relative to each remaining segment.

The computing system 60 (FIG. 3) may be configured to determine a characteristic of each pixel 80 (FIG. 6) within the ROI 78 (FIG. 5). In various examples, the characteristic may be an intensity of a defined color within a pixel 80 (FIG. 6), a color of the pixel 80 (FIG. 6), a number of pixels 80 (FIG. 6) with a common characteristic adjacent to one another, and/or any other characteristic. For instance, each pixel 80 (FIG. 6) of the ROI 78 (FIG. 5) may be transformed from a combination of red, green, and blue (RGB) intensities to grayscale from 0 to 255. A black pixel 80 (FIG. 6) may then have a greyscale intensity of 0, while a completely white pixel 80 (FIG. 6) may have an intensity of 255. In various examples, large particles of a defined size (*e.g.,* those with a size of > 106 µm) may have an intensity of a defined value (*e.g*., more than 230). Additionally, the computing system 60 may be configured to determine a particle size distribution of the metal powder by counting the number of pixels 80 (FIG. 6) of intensity greater than the defined value.

The computing system 60 (FIG. 3) may additionally or alternatively be configured to determine an atomization yield, and/or any other data associated with the atomization zone 42 (FIG. 2) based on the characteristic of each pixel 80 (FIG. 6) within the ROI 78 (FIG. 5). For instance, the image analysis module 76 (FIG. 3) may receive images 58 (FIG. 4) at a defined rate such that the characteristic may be monitored over at a defined interval for a defined time, which may be used to determine a yield of the metal powder.

Referring back to FIG. 3, in some examples, the computing system 60 can store or include one or more machine-learned models 82. The machine-learned model 82 can be configured to receive the image 58 (FIG. 4) and process the image 58 (FIG. 4), possibly in conjunction with the data analysis module, to determine the particle size distribution of the reactive metal powder 44 (FIG. 2). As provided herein, the computing system 60 may be configured to receive an image 58 (FIG. 4) from the imaging device 50 and define an ROI 78 (FIG. 5) from the image 58 (FIG. 4), which may be completed through a machine-learned model 82. As provided herein, the ROI 78 (FIG. 5) may be a region of the image 58 (FIG. 4) that includes at least a portion of an atomization zone 42 (FIG. 2) of the in-flight heat treatment device 10 (FIG. 1). In this manner, various features may be extracted from the image 58 (FIG. 4).

Additionally, the computing system 60 may be configured to segment the ROI 78 (FIG. 5) by pixel 80 (FIG. 6), which may be completed through a machine-learned model 82. Additionally, the computing system 60 may be configured to determine a characteristic of each pixel 80 (FIG. 6) within the ROI 78 (FIG. 5), which may also be completed through a machine-learned model 82. For instance, each pixel 80 (FIG. 6) of the original image 58 (FIG. 4) may be transformed from a combination of red, green, and blue (RGB) intensities to grayscale from 0 to 255. A black pixel 80 (FIG. 6) will then have a greyscale intensity of 0, while a completely white pixel 80 (FIG. 6) will have an intensity of 255. In various examples, large particles (*e.g*., those with a size of > 106 µm) may have an intensity of a defined value (*e.g.,* more than 230). Additionally, the computing system 60 may be configured to determine a particle size distribution of the reactive metal powder 44 (FIG. 2) by counting the number of pixels 80 (FIG. 6) of intensity greater than the defined value. Additionally, the computing system 60 may be configured to determine a particle size distribution of the reactive metal powder 44 (FIG. 2) based on the count, and ultimately with an atomization yield, and/or any other data associated with the atomization zone 42 based on the characteristic of each pixel 80 (FIG. 6) within the ROI 78 (FIG. 5), which may be completed through a machine-learned model 82.

In some examples, the machine-learned model 82 can correspond to a linear model. For instance, in some embodiments, the linear model may be or include a linear regression model. A linear regression model may be used to take the image 58 (FIG. 4) from the imaging device 50 and provide an intermittent and/or continuous, numeric output value for the particle size distribution of the metal powder. Linear regression models may rely on various techniques, such as ordinary least squares, ridge regression, lasso, gradient descent, and/or the like.

Additionally or alternatively, the machine-learned model 82 may correspond to a non-linear model. For instance, in some embodiments, the machine-learned model 82 may be or include a neural network, such as, for example, a convolutional neural network. Example neural networks include feed-forward neural networks, recurrent neural networks (*e.g*., long short-term memory recurrent neural networks), convolutional neural networks, transformer neural networks (or any other models that perform self-attention), or other forms of neural networks. Neural networks can include multiple connected layers of neurons and networks with one or more hidden layers, which can be referred to as "deep" neural networks. Typically, at least some of the neurons in a neural network include non-linear activation functions.

As further examples, the machine-learned model 82 can be or can otherwise include various other models, such as a support vector machine, one or more decision-tree-based models (*e.g*., random forest models), a Bayes classifier, a K-nearest neighbor classifier, and/or other types of models, including both linear models and non-linear models.

Referring further to FIG. 3, in some embodiments, the instructions 66 stored within the memory 64 of the computing system 60 may also be executed by the processor(s) 62 to implement a control module 84. In general, the control module 84 may be configured to electronically control the operation of one or more components of the imaging system 48 and/or the in-flight heat treatment device 10 (FIG. 1).

In several embodiments, the computing system 60 may also be communicatively coupled to a user interface 86. The user interface 86 may be configured to provide feedback to the operator of the in-flight heat treatment device 10 (FIG. 1) and/or the imaging system 48 (FIG. 2). Thus, the user interface 86 may include one or more feedback devices, such as display screens, speakers, warning lights, and/or the like, which are configured to communicate such feedback. In addition, some embodiments of the user interface 86 may include one or more input devices, such as touchscreens, keypads, touchpads, knobs, buttons, sliders, switches, mice, microphones, and/or the like, which are configured to receive user inputs from the operator.

Moreover, as shown in FIG. 3, the computing system 60 may also include a communications interface 88 to communicate with any of the various other system components described herein. For instance, one or more communicative links or interfaces (*e.g*., one or more data buses and/or wireless connections) may be provided between the communications interface 88 and the user interface to allow data transmitted from the user interface to be received by the computing system 60. Further, one or more communicative links or interfaces (*e.g*., one or more data buses and/or wireless connections) may be provided between the communications interface 88 and one or more sensors 90. The one or more sensors 90 may be configured to capture data associated with the reactive metal powder 44 (FIG. 2). For instance, the data may be indicative of the particle size distribution of the reactive metal powder 44 (FIG. 2), the yield, and/or any other information. In several examples, the computing system 60 may integrate data from the imaging device 50 (FIG. 2), the user interface 86, and/or the one or more sensors 90 (*e.g.,* via the machine learning model 82) to predict the particle size distribution of the reactive metal powder 44 (FIG. 2), the yield, and/or any other information, adjusting variables for increased production.

The one or more sensors 90 may include gas composition sensors, metal flow rate sensors, optical and luminosity sensors, particle characterization sensors, pressure and flow sensors (*e.g*., differential pressure gauges and mass flow controllers in gas lines ensure stable atomization, preventing yield losses from turbulence), acoustic and vibration sensors (*e.g*., accelerometers that may detect equipment issues (*e.g.,* torch wear) that could halt production), environmental sensors (*e.g.,* radiation or magnetic field sensors that may monitor plasma containment), and/or any other practicable sensor.

In some cases, gas composition affects the surface layer formation and thus flowability and yield. Excessive or insufficient additive gas (*e.g.,* O₂, air, CO₂, or water vapor at 50-80 ppm) can lead to over-oxidation (reducing usable powder) or poor flowability (increasing agglomeration losses). As such, in various examples, a gas chromatograph (GC) or gas chromatography-mass spectrometer (GC-MS) may be positioned in the gas supply line or atomization chamber to analyze the concentration of additive gases. For example, the GC sensor may separate and quantify components like O₂ or N₂, providing data on ppm levels. This can correlate with particle luminosity: higher O₂ may increase oxidation reactions, enhancing visible emission spectra from excited particles, which serves as a proxy for reaction completeness and potential particle size distribution of the metal powder, the yield, and/or any other information impacts. Additionally or alternatively, inline oxygen sensors (*e.g*., electrochemical or zirconia-based) or humidity sensors (*e.g*., capacitive hygrometers for water vapor) may monitor the atomization mixture. Sensor data feeds into the computing system 60 to adjust gas flow, ensuring compliance with thresholds (*e.g*., <1000 ppm) and increasing the fraction of powder meeting AMS 4998 purity. These gas composition sensors may improve yield by preventing off-spec batches; for instance, if O₂ exceeds limits, the process can be halted, avoiding waste.

Additionally or alternatively, the one or more sensors 90 may be configured as metal flow rate sensors. In various cases, the metal feed rate influences particle production rate, density, and interactions, affecting yield through PSD variability and agglomeration. In several examples, a scale or load cell may be integrated with a metal source feeder (*e.g.,* wire spool or tundish) to measure mass flow rate. For example, a differential weight sensor may track the decrease in feedstock mass over time, calculating feed rate in kg/s. This data correlates with particle count: higher feed rates may produce more particles, increasing overall luminosity (total emitted light from the plasma plume) as a measure of atomization efficiency. Additionally or alternatively, an ultrasonic or electromagnetic flow meter may monitor molten metal flow if using a liquid source. Combined with output collection scales (*e.g.,* in the powder bin), these enable real-time particle size distribution of the metal powder, the yield, and/or any other information (*e.g*., reduce feed if agglomeration is detected via luminosity drop). The metal flow rate sensors may increase yield by optimizing gas-to-metal ratios (<20), reducing losses from incomplete atomization.

Additionally or alternatively, the one or more sensors 90 may be configured as optical and luminosity sensors. Particle luminosity may provide insights into temperature, reaction kinetics, and quality, indirectly informing the particle size distribution of the metal powder, the yield, and/or any other information. In various examples, a high-speed camera or photodiode array monitors the plasma plume and in-flight particles, capturing luminosity intensity and spectra. For example, increased luminosity from oxidation (due to additive gas) indicates effective surface layer formation; anomalies (*e.g.*, dim spots) may signal poor yield from defects like satellites. Additionally or alternatively, optical emission spectrometers (OES) may analyze emission lines (*e.g.,* Ti or O wavelengths) to infer gas reactions and particle temperature. The computing system 60 may correlate this data with the particle size distribution of the metal powder, the yield, and/or any other information: optimal luminosity predicts higher fractions of spherical, flowable powder post-sieving. Additionally or alternatively, IR pyrometers or thermal cameras may measure melt and particle temperatures, ensuring they remain in ranges (*e.g.,* >2000 °C for Ti) for efficient atomization. As such, the optical and luminosity sensors may improve the particle size distribution of the metal powder, the yield, and/or any other information by enabling closed-loop control, *e.g*., adjusting plasma power if luminosity deviates.

Additionally or alternatively, the one or more sensors 90 may be configured as particle characterization sensors. Inline sensors assess PSD, sphericity, and flowability precursors to predict the particle size distribution of the metal powder, the yield, and/or any other information. In some cases, laser diffraction or dynamic light scattering sensors in the atomization chamber sample in-flight particles, estimating PSD (*e.g.,* d10-d90). This may predict sieving the particle size distribution of the reactive metal powder 44 (FIG. 2), the yield, and/or any other information. Additionally or alternatively, acoustic emission (AE) sensors may detect plasma instabilities or particle collisions, signaling agglomeration that alters the particle size distribution of the metal powder, the yield, and/or any other information. Microphone arrays capture sound waves from atomization, correlating with particle density. For post-atomization, vibration sensors on sieves monitor efficiency, ensuring increased recovery of target fractions (*e.g.,* 15-45 µm).

It will be appreciated that, although the various control functions and/or actions will generally be described herein as being executed by the computing system 60, which may receive data from the imaging device 50 (FIG. 2), the user interface 86, and/or the one or more sensors 90, one or more of such control functions/actions (or portions thereof) may be executed by a separate computing system or may be distributed across two or more computing systems (including, for example, the computing system 60 and a separate computing system). For instance, in some embodiments, the computing system 60 may be configured to acquire data from the imaging device 50 (FIG. 2) for subsequent processing and/or analysis by a separate computing system (*e.g*., a computing system associated with a remote server). In other embodiments, the computing system 60 may be configured to execute the image analysis module 76 to determine the particle size distribution of the reactive metal powder 44 (FIG. 2), the yield, and/or any other information, while a separate computing system may be configured to execute the control module 84 to control the operation of the in-flight heat treatment device 10 based on data and/or instructions 66 transmitted from the computing system 60.

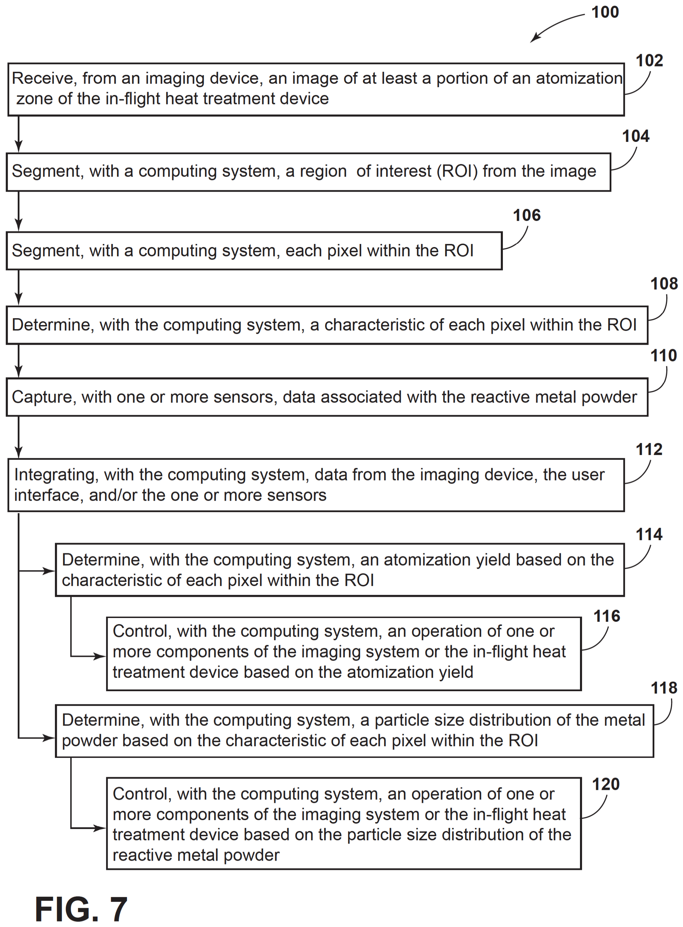

Referring now to FIG. 7, a flow diagram of a method 100 for operating the atomizing system and an imaging system to detect reactive metals is illustrated in accordance with aspects of the present subject matter. In general, the method 100 will be described herein with reference to the imaging system 48 and/or the in-flight heat treatment device 10 and related components described with reference to FIGS. 1-3. It will be appreciated, however, that the disclosed method 100 may be implemented with imaging systems and/or in-flight heat treatment devices having any other suitable configurations, and having any other suitable system configuration. In addition, although FIG. 7 depicts steps performed in a particular order for purposes of illustration and discussion, the methods discussed herein are not limited to any particular order or arrangement. One skilled in the art, using the disclosures provided herein, will appreciate that various steps of the method disclosed herein can be omitted, rearranged, combined, and/or adapted in various ways without deviating from the scope of the present disclosure.

As shown in FIG. 7, at (102), the method 100 may include receiving an image of at least a portion of an atomization zone of the in-flight heat treatment device from an imaging device. At (104), the method 100 may include segmenting a region of interest (ROI) from the image with a computing system. At (106), the method 100 may include segmenting each pixel within the ROI with the computing system. At (108), the method 100 may include determining a characteristic of each pixel within the ROI with the computing system. At (110), the method 100 may include capturing data associated with the reactive metal powder from one or more sensors. For instance, the data may be indicative of the particle size distribution of the metal powder, the yield, and/or any other information. At (112), the method 100 may include integrating, with the computing system, data from the imaging device, the user interface, and/or the one or more sensors (*e.g*., via a machine learning model) to predict the particle size distribution of the metal powder, the yield, and/or any other information, adjusting variables for increased production.

At (114), the method may include determining an atomization yield based on the characteristics of each pixel within the ROI with the computing system. At (118), the method 100 may include determining a particle size distribution of the metal powder based on the characteristics of each pixel within the ROI with the computing system.

At (116), the method 100 may include controlling an operation of one or more components of the imaging system or the in-flight heat treatment device based on the atomization yield with the computing system. Additionally or alternatively, at (120), the method 100 may include controlling an operation of one or more components of the imaging system or the in-flight heat treatment device based on the particle size distribution of the reactive metal powder with the computing system.

In various examples, any systems of the method 100, including, but not limited to defining the region of interest (ROI) from the image, segmenting the ROI, determining the characteristic of each pixel within the ROI, or determining the particle size distribution of the reactive metal powder based on the characteristic of each pixel within the ROI is completed through a machine-learned model.

Further aspects are provided by the subject matter of the following clauses:

An atomizing system having an imaging system operatively coupled with an in-flight heat treatment device, the atomizing system comprising: an imaging device configured to capture an image of at least a portion of an atomization zone of the in-flight heat treatment device; and a computing system operably coupled with the imaging device, the computing system including a processor and associated memory, the memory storing instructions that, when implemented by the processor, configure the computing system to: receive the image from the imaging device; define a region of interest (ROI) from the image; segment the ROI; determine a characteristic of each pixel within the ROI; and determine a particle size distribution of a reactive metal powder based on the characteristic of each pixel within the ROI.

The atomizing system of any one or more of these clauses, wherein the computing system is further configured to: determine an atomization yield based on the characteristic of each pixel within the ROI.

The atomizing system of any one or more of these clauses, wherein the in-flight heat treatment device includes an atomizing source configured to heat a metal source that is to be treated by injecting the metal source into a plasma.

The atomizing system of any one or more of these clauses, wherein the atomizing source includes an atomization gas, the atomization gas configured to mix with an additive gas to perform a chemical reaction in a reaction zone.

The atomizing system of any one or more of these clauses, wherein the in-flight heat treatment device is configured to produce a jet of the atomization gas, the additive gas, and metal particles that transform the metal source into the reactive metal powder in the atomization zone in the reaction zone.

The atomizing system of any one or more of these clauses, further comprising: a collecting bucket configured to recover the reactive metal powder.

The atomizing system of any one or more of these clauses, further comprising: one or more sensors operably coupled with the computing system and configured to capture data associated with the reactive metal powder.

The atomizing system of any one or more of these clauses, wherein the one or more sensors includes a gas composition sensor, a metal flow rate sensor, an optical and luminosity sensor, a particle characterization sensor, a pressure and flow sensor, an acoustic and vibration sensor, or an environmental sensor.

The atomizing system of any one or more of these clauses, wherein at least one of defining the region of interest (ROI) from the image, segmenting the ROI, determining the characteristic of each pixel within the ROI, or determining the particle size distribution of the reactive metal powder based on the characteristic of each pixel within the ROI is completed through a machine-learned model.

The atomizing system of any one or more of these clauses, wherein the computing system is further configured to: control an operation of one or more components of the imaging system or the in-flight heat treatment device based on the particle size distribution of the reactive metal powder based on the characteristic of each pixel within the ROI.

A method for operating an atomizing system having an in-flight heat treatment device operatively coupled with an imaging system to detect reactive metals, the method comprising: receiving, from an imaging device, an image of at least a portion of an atomization zone of the in-flight heat treatment device; segmenting, with a computing system, a region of interest (ROI) from the image; segmenting, with the computing system, each pixel within the ROI; determining, with the computing system, a characteristic of each pixel within the ROI; and determining, with the computing system, an atomization yield based on the characteristic of each pixel within the ROI.

The method of any one or more of these clauses, further comprising: controlling, with the computing system, an operation of one or more components of the imaging system or the in-flight heat treatment device based on the atomization yield.

The method of any one or more of these clauses, further comprising: determining, with the computing system, a particle size distribution of a reactive metal powder based on the characteristic of each pixel within the ROI.

The method of any one or more of these clauses, further comprising: controlling, with the computing system, an operation of one or more components of the imaging system or the in-flight heat treatment device based on the particle size distribution of the reactive metal powder.

The method of any one or more of these clauses, wherein at least one of defining the region of interest (ROI) from the image, segmenting the ROI, or determining the characteristic of each pixel within the ROI, is completed through a machine-learned model.

An atomizing system comprising: an in-flight heat treatment device configured to form a reactive metal powder within a reaction zone that includes a jet of an atomization gas, an additive gas, and metal particles that transform a metal source into the reactive metal powder in an atomization zone downstream of the reaction zone; an imaging device configured to capture an image of at least a portion of the atomization zone of the in-flight heat treatment device; and a computing system operably coupled with the imaging device, the computing system including a processor and associated memory, the memory storing instructions that, when implemented by the processor, configure the computing system to: receive the image from the imaging device; determine a characteristic of each pixel within the image; and determine a particle size distribution of the reactive metal powder based on the characteristic of each pixel within the image.

The atomizing system of any one or more of these clauses, wherein the computing system is further configured to: determine an atomization yield based on the characteristic of each pixel within the image.

The atomizing system of any one or more of these clauses, wherein the computing system is further configured to: control an operation of one or more components of the imaging device or the in-flight heat treatment device based on the particle size distribution of the reactive metal powder based on the characteristic of each pixel within the image.

The atomizing system of any one or more of these clauses, further comprising: a user interface communicatively coupled to the computing system, wherein the user interface is configured to provide feedback related to the in-flight heat treatment device or the imaging device.

The atomizing system of any one or more of these clauses, wherein the computing system includes one or more machine-learned models, and wherein the one or more machine-learned models are implemented to determine the characteristic of each pixel within the image or determine the particle size distribution of the reactive metal powder based on the characteristic of each pixel within the image.

This written description uses exemplary embodiments to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. An atomizing system (36) having an imaging system (48) operatively coupled with an in-flight heat treatment device (10), the atomizing system (36) comprising:
an imaging device (50) configured to capture an image (58) of at least a portion of an atomization zone (42) of the in-flight heat treatment device (10); and
a computing system (60) operably coupled with the imaging device (50), the computing system (60) including a processor (62) and associated memory (64), the memory (64) storing instructions (66) that, when implemented by the processor (62), configure the computing system (60) to:
receive the image (58) from the imaging device (50);
define a region of interest (ROI (78)) from the image (58);
segment the ROI (78);
determine a characteristic of each pixel (80) within the ROI (78); and
determine a particle size distribution of a reactive metal powder (44) based on the characteristic of each pixel (80) within the ROI (78).

2. The atomizing system (36) of claim 1, wherein the computing system (60) is further configured to:
determine an atomization yield based on the characteristic of each pixel (80) within the ROI (78).

3. The atomizing system (36) of any preceding claim, wherein the in-flight heat treatment device (10) includes an atomizing source (12) configured to heat a metal source that is to be treated by injecting the metal source into a plasma (20).

4. The atomizing system (36) of claim 3, wherein the atomizing source (12) includes an atomization gas (22), the atomization gas (22) configured to mix with an additive gas (24) to perform a chemical reaction in a reaction zone (26).

5. The atomizing system (36) of claim 4, wherein the reaction zone (26) includes a stream of the atomization gas (22), the additive gas (24), and metal particles (30) that transform the metal source into the reactive metal powder (44) in the atomization zone (42).

6. The atomizing system (36) of claim 5, wherein the reactive metal powder (44) is recovered in a collecting bucket (34).

7. The atomizing system (36) of any preceding claim, further comprising:
one or more sensors (90) operably coupled with the computing system (60) and configured to capture data (68) associated with the reactive metal powder (44).

8. The atomizing system (36) of claim 7, wherein the one or more sensors (90) includes a gas composition sensor, a metal flow rate sensor, an optical and luminosity sensor, a particle characterization sensor, a pressure and flow sensor, an acoustic and vibration sensor, or an environmental sensor.

9. The atomizing system (36) of any preceding claim, wherein at least one of defining the ROI (78) from the image (58), segmenting the ROI (78), determining the characteristic of each pixel (80) within the ROI (78), or determining the particle size distribution of the reactive metal powder (44) based on the characteristic of each pixel (80) within the ROI (78) is completed through a machine-learned model (82).

10. The atomizing system (36) of claim 1, wherein the computing system (60) is further configured to:
control an operation of one or more components of the imaging system (48) or the in-flight heat treatment device (10) based on the particle size distribution of the reactive metal powder (44) based on the characteristic of each pixel (80) within the ROI (78).

11. A method (100) for operating an atomizing system (36) having an in-flight heat treatment device (10) operatively coupled with an imaging system (48) to detect reactive metals, the method (100) comprising:
receiving, from an imaging device (50), an image (58) of at least a portion of an atomization zone (42) of the in-flight heat treatment device (10);
segmenting, with a computing system (60), a region of interest (ROI (78)) from the image (58);
segmenting, with the computing system (60), each pixel (80) within the ROI (78);
determining, with the computing system (60), a characteristic of each pixel (80) within the ROI (78); and
determining, with the computing system (60), an atomization yield based on the characteristic of each pixel (80) within the ROI (78).

12. The method (100) of claim 11, further comprising:
controlling, with the computing system (60), an operation of one or more components of the imaging system (48) or the in-flight heat treatment device (10) based on the atomization yield.

13. The method (100) of any preceding claim, further comprising:
determining, with the computing system (60), a particle size distribution of a reactive metal powder (44) based on the characteristic of each pixel (80) within the ROI (78).

14. The method (100) of claim 13, further comprising:
controlling, with the computing system (60), an operation of one or more components of the imaging system (48) or the in-flight heat treatment device (10) based on the particle size distribution of the reactive metal powder (44).

15. The method (100) of any preceding claim, wherein at least one of defining the region of interest (ROI (78)) from the image (58), segmenting the ROI (78), or determining the characteristic of each pixel (80) within the ROI (78), is completed through a machine-learned model (82).
